# EUROPEAN PATENT APPLICATION

(11) **EP 4 507 426 A1**
(43) Date of publication of application: **12.02.2025**
(21) Application number: 23778522.5
(22) Date of filing: 31.03.2023
(51) Int. Cl.: H04W 72/04

(54) **DEMODULATION REFERENCE SIGNAL TRANSMISSION METHOD AND APPARATUS, TERMINAL, AND NETWORK SIDE DEVICE**

(30) Priority: 02.04.2022 CN 202210346947; 09.09.2022 CN 202211103762
(71) Applicant: Vivo Mobile Communication Co., Ltd., Dongguan, Guangdong 523863 (CN)
(72) Inventor: ZHENG, Kaili, Dongguan, Guangdong 523863 (CN); LIU, Hao, Dongguan, Guangdong 523863 (CN); TAMRAKAR, Rakesh, Dongguan, Guangdong 523863 (CN); SONG, Yang, Dongguan, Guangdong 523863 (CN)
(74) Representative: Murgitroyd & Company
(86) International application number: PCT/CN2023/085801
(87) International publication number: WO 2023/186158

(57) **Abstract**

This application pertains to the field of mobile communication technologies, and discloses a demodulation reference signal transmission method and apparatus, a terminal, and a network-side device. The demodulation reference signal transmission method in embodiments of this application includes: receiving, by a first communication device, a target demodulation reference signal from a second communication device; and performing, by the first communication device, channel estimation on the target demodulation reference signal, where the target demodulation reference signal is generated based on N frequency division cover code sequences, the N frequency division cover code sequences are generated based on a subsequence with a target length as a basic unit and according to a resource mapping rule corresponding to the subsequence with the target length, the frequency division cover code sequence is used for code division multiplexing of a port of the target demodulation reference signal, and N is a positive integer.

## Description

### CROSS-REFERENCE TO RELATED APPLICATIONS

The present invention claims priority to Chinese Patent Application No. 202210346947.2, filed with the China National Intellectual Property Administration on April 2, 2022, and entitled "DEMODULATION REFERENCE SIGNAL TRANSMISSION METHOD AND APPARATUS, TERMINAL, AND NETWORK-SIDE DEVICE", and Chinese Patent Application No. 202211103762.5, filed with the China National Intellectual Property Administration on September 9, 2022, and entitled "DEMODULATION REFERENCE SIGNAL TRANSMISSION METHOD AND APPARATUS, TERMINAL, AND NETWORK-SIDE DEVICE", both of which are incorporated herein by reference in their entireties.

### TECHNICAL FIELD

This application pertains to the field of mobile communication technologies, and specifically relates to a demodulation reference signal transmission method and apparatus, a terminal, and a network-side device.

### BACKGROUND

In an existing new radio (New Radio, NR) system, a data channel demodulation reference signal (Demodulation Reference Signal, DMRS) is designed based on a frequency division orthogonal cover code (Frequency Division Orthogonal Cover Code, FD OCC) sequence with a length of 2. When a type of the DMRS is configuration type 1 (type 1), a maximum quantity of DMRS ports supported by the DMRS is 8; or when a type of the DMRS is configuration type 2 (type 2), a maximum quantity of DMRS ports supported by the DMRS is 12.

However, as a quantity of terminals connected in a network increases, an existing DMRS port quantity cannot meet an actual application requirement. Consequently, transmitted data flows are limited.

### SUMMARY

Embodiments of this application provide a demodulation reference signal transmission method and apparatus, a terminal, and a network-side device to resolve a problem that transmitted data flows are limited because an existing DMRS port quantity cannot meet an actual application requirement.

According to a first aspect, a demodulation reference signal transmission method is provided. The method is applied to a first communication device and includes:
receiving, by the first communication device, a target demodulation reference signal from a second communication device; and
performing, by the first communication device, channel estimation on the target demodulation reference signal, where
the target demodulation reference signal is generated based on N frequency division cover code sequences, the N frequency division cover code sequences are generated based on a subsequence with a target length as a basic unit and according to a resource mapping rule corresponding to the subsequence with the target length, the frequency division cover code sequence is used for code division multiplexing of a port of the target demodulation reference signal, and N is a positive integer.

According to a second aspect, a demodulation reference signal transmission apparatus is provided and includes:
a transceiver module, configured to receive a target demodulation reference signal from a second communication device; and
a calculation module, configured to perform channel estimation on the target demodulation reference signal, where
the target demodulation reference signal is generated based on N frequency division cover code sequences, the N frequency division cover code sequences are generated based on a subsequence with a target length as a basic unit and according to a resource mapping rule corresponding to the subsequence with the target length, the frequency division cover code sequence is used for code division multiplexing of a port of the target demodulation reference signal, and N is a positive integer.

According to a third aspect, a demodulation reference signal transmission method is provided. The method is applied to a second communication device and includes:
generating, by the second communication device, N frequency division cover code sequences by using a subsequence with a target length as a basic unit and according to a resource mapping rule corresponding to the subsequence with the target length, where the frequency division cover code sequence is used for code division multiplexing of a demodulation reference signal port of a target demodulation reference signal; and
generating, by the second communication device, the target demodulation reference signal based on the N frequency division cover code sequences, and sending the target demodulation reference signal to a first communication device, where
N is a positive integer.

According to a fourth aspect, a demodulation reference signal transmission apparatus is provided and includes:
a generation module, configured to generate N frequency division cover code sequences by using a subsequence with a target length as a basic unit and according to a resource mapping rule corresponding to the subsequence with the target length, where the frequency division cover code sequence is used for code division multiplexing of a demodulation reference signal port of a target demodulation reference signal; and
a transmission module, configured to generate the target demodulation reference signal based on the N frequency division cover code sequences, and send the target demodulation reference signal to a first communication device, where
N is a positive integer.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The communication interface is configured to receive a target demodulation reference signal from a second communication device, and the processor is configured to perform channel estimation on the target demodulation reference signal.

According to a seventh aspect, a network-side device is provided. The network-side device includes a processor and a memory. The memory stores a program or instructions capable of running on the processor. When the program or instructions are executed by the processor, the steps of the method according to the first aspect are implemented.

According to an eighth aspect, a network-side device is provided and includes a processor and a communication interface. The processor is configured to generate N frequency division cover code sequences by using a subsequence with a target length as a basic unit and according to a resource mapping rule corresponding to the subsequence with the target length, where the frequency division cover code sequence is used for code division multiplexing of a demodulation reference signal port of a target demodulation reference signal; and the communication interface is configured to generate the target demodulation reference signal based on the N frequency division cover code sequences, and send the target demodulation reference signal to a first communication device.

According to a ninth aspect, a demodulation reference signal transmission system is provided and includes a terminal and a network-side device. The terminal may be configured to perform the steps of the demodulation reference signal transmission method according to the first aspect. The network-side device may be configured to perform the steps of the demodulation reference signal transmission method according to the third aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions to implement the method according to the first aspect or implement the method according to the third aspect.

According to a twelfth aspect, a computer program or program product is provided. The computer program or program product is stored in a storage medium. The computer program or program product is executed by at least one processor to implement the steps of the demodulation reference signal transmission method according to the first aspect or implement the steps of the demodulation reference signal transmission method according to the third aspect.

In the embodiments of this application, the N frequency division cover code sequences are generated based on the subsequence with the target length as the basic unit and according to the resource mapping rule corresponding to the subsequence with the target length; and the target demodulation reference signal is generated based on the N frequency division cover code sequences, and sent for channel estimation, so that the target DMRS can support more ports and that transmitted data flows can be increased.

### BRIEF DESCRIPTION OF DRAWINGS

FIG. 1 is a schematic structural diagram of a wireless communication system to which an embodiment of this application can be applied;
FIG. 2 is a schematic flowchart of a demodulation reference signal transmission method according to an embodiment of this application;
FIG. 3 is a schematic diagram of a pattern of a demodulation reference signal according to an embodiment of this application;
FIG. 4 is a schematic diagram of another pattern of a demodulation reference signal according to an embodiment of this application;
FIG. 5 is a schematic diagram of another pattern of a demodulation reference signal according to an embodiment of this application;
FIG. 6 is a schematic diagram of a resource pattern for despreading a demodulation reference signal according to an embodiment of this application;
FIG. 7 is a schematic diagram of another resource pattern for despreading a demodulation reference signal according to an embodiment of this application;
FIG. 8 is a schematic structural diagram of a demodulation reference signal transmission apparatus according to an embodiment of this application;
FIG. 9 is another schematic flowchart of a demodulation reference signal transmission method according to an embodiment of this application;
FIG. 10 is another schematic structural diagram of a demodulation reference signal transmission apparatus according to an embodiment of this application;
FIG. 11 is a schematic structural diagram of a communication device according to an embodiment of this application;
FIG. 12 is a schematic structural diagram of a terminal for implementing an embodiment of this application; and
FIG. 13 is a schematic structural diagram of a network-side device for implementing an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

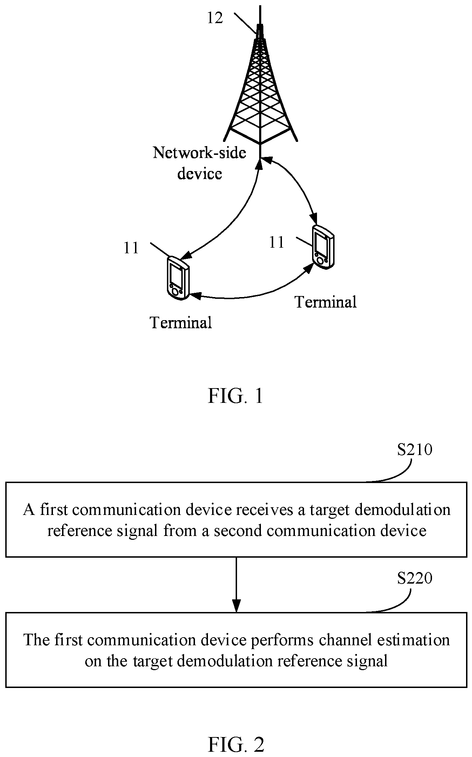

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a wireless local area network (Wireless Local Area Network, WLAN) access point, a Wi-Fi node, or the like. The base station may be referred to as a NodeB, an evolved NodeB (evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

A demodulation reference signal transmission method and apparatus, a terminal, and a network-side device provided in embodiments of this application are hereinafter described in detail by using some embodiments and application scenarios thereof with reference to the accompanying drawings.

As shown in FIG. 2, an embodiment of this application provides a demodulation reference signal transmission method. The method is performed by a first communication device. The first communication device may be a network-side device or a terminal. In other words, the method may be performed by software or hardware installed in the first communication device. The method includes the following steps.

S210. The first communication device receives a target demodulation reference signal from a second communication device.

The target demodulation reference signal is generated based on N frequency division cover code sequences, the N frequency division cover code sequences are generated based on a subsequence with a target length as a basic unit and according to a resource mapping rule corresponding to the subsequence with the target length, the frequency division cover code sequence is used for code division multiplexing (Code Division Multiplexing, CDM) of a port of the target demodulation reference signal, and N is a positive integer.

It should be understood that the second communication device may be a network-side device or a terminal.

The second communication device is preconfigured with subsequences with a plurality of lengths, where the subsequences with the plurality of lengths may be designed based on actual requirements, for example, may be subsequences with lengths of 2, 4, and 6 respectively.

The second communication device determines the subsequence with the target length from the subsequences with the plurality of lengths, and then generates the N frequency division cover code sequences according to the resource mapping rule corresponding to the subsequence with the target length, where each frequency division cover code sequence may correspond to one or two ports (Port) among M ports belonging to a same code division multiplexing group (CDM group) in the target DMRS.

The target DMRS may be classified into a first configuration type and a second configuration type, where the first configuration type is related to DMRS configuration type 1 and the second configuration type is related to DMRS configuration type 2.

S220. The first communication device performs channel estimation on the target demodulation reference signal.

After receiving the target DMRS, the first communication device may perform channel estimation on the target DMRS according to a preset despreading rule.

If a DMRS is generated only based on a frequency division orthogonal cover code with a length of 2, each CDM may include only up to two mutually orthogonal DMRS ports. However, if a frequency division cover code is generated based on the subsequence with the target length as the basic unit, and then a DMRS is generated based on the frequency division cover code, each CDM group may include more mutually orthogonal DMRS ports, thereby increasing a total quantity of DMRS ports supported by a system.

As can be learned from the technical solution of the foregoing embodiment, in this embodiment of this application, the N frequency division cover code sequences are generated based on the subsequence with the target length as the basic unit and according to the resource mapping rule corresponding to the subsequence with the target length; and the target demodulation reference signal is generated based on the N frequency division cover code sequences, and sent for channel estimation, so that the target DMRS can support more ports and that transmitted data flows can be increased.

Based on the foregoing embodiment, further, the subsequence with the target length is one of the following:
a subsequence with a first length;
a subsequence with a second length; and
a subsequence with a third length, where
the first length is 2, the second length is 4, and the third length is 6.

This embodiment of this application is illustrated by using the subsequences configured with the foregoing three lengths as an example.

In an implementation, the subsequence with the first length is at least one of the following:
a first subsequence [+1, +1];
a second subsequence [+1, -1];
a third subsequence [-1, -1]; and
a fourth subsequence [-1, +1].

The third subsequence may be generated by multiplying the first subsequence by -1, and the fourth subsequence may be generated by multiplying the second subsequence by -1.

In an implementation, the subsequence with the second length is at least one of the following:
a fifth subsequence [+1, +1, +1, +1];
a sixth subsequence [+1, -1, +1, -1];
a seventh subsequence [+1, +1, -1, -1]; and
an eighth subsequence [+1, -1, -1, +1].

In an implementation, the subsequence with the third length is at least one of the following:
a ninth subsequence [+1, +1, +1, +1, +1, +1];
a tenth subsequence [+1, -1, +1, -1, +1, -1];
an eleventh subsequence [+1, +1, -1, -1, +1, +1]; and
a twelfth subsequence [+1, -1, -1, +1, +1, -1].

In an implementation, based on the foregoing subsequences with different lengths, the frequency division cover code sequence is generated in one of the following manners:
by using the subsequence with the first length as a basic unit, mapping the subsequence with the first length in a form of a first mapping rule to two subcarriers on a symbol occupied by the port, where the two subcarriers belong to a same radio bearer (Radio Bearer, RB);
by using the subsequence with the second length as a basic unit, mapping the subsequence with the second length in a form of a second mapping rule to four subcarriers on the symbol occupied by the port, where the four subcarriers belong to a same RB or two RBs; and
by using the subsequence with the third length as a basic unit, mapping the subsequence with the third length in a form of a third mapping rule to six subcarriers on the symbol occupied by the port, where the six subcarriers belong to a same RB.

In a case that the subsequence with the first length, that is, the subsequence with the length of 2, is the subsequence with the target length, the corresponding first mapping rule is specifically illustrated as follows.

In an implementation, in a case that the frequency division cover code sequence is generated based on the first subsequence as a basic unit, the first mapping rule is to sequentially map the first subsequence to subcarriers on the symbol occupied by the port.

In another implementation, in a case that the frequency division cover code sequence is generated based on the second subsequence as a basic unit, the first mapping rule is to sequentially map the second subsequence to subcarriers on the symbol occupied by the port.

In an implementation, in a case that the frequency division cover code sequence is generated based on the first subsequence and the third subsequence as basic units, the first mapping rule is to alternately map the first subsequence and the third subsequence to subcarriers on the symbol occupied by the port.

In another implementation, in a case that the frequency division cover code sequence is generated based on the second subsequence and the fourth subsequence as basic units, the first mapping rule is to alternately map the second subsequence and the fourth subsequence to subcarriers on the symbol occupied by the port.

It should be understood that the symbol occupied by the port may be an orthogonal frequency division multiplexing (Orthogonal Frequency Division Multiplex, OFDM) symbol or other symbols. This is not specifically limited herein.

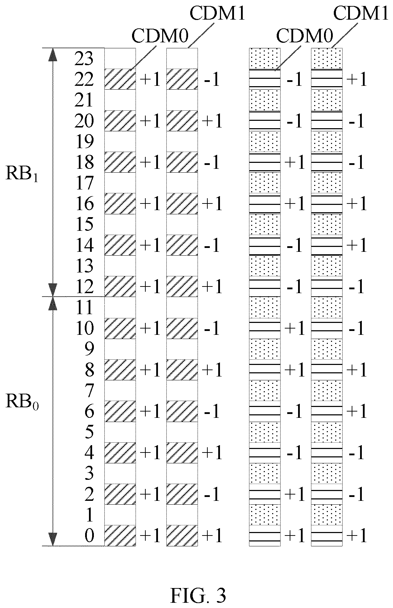

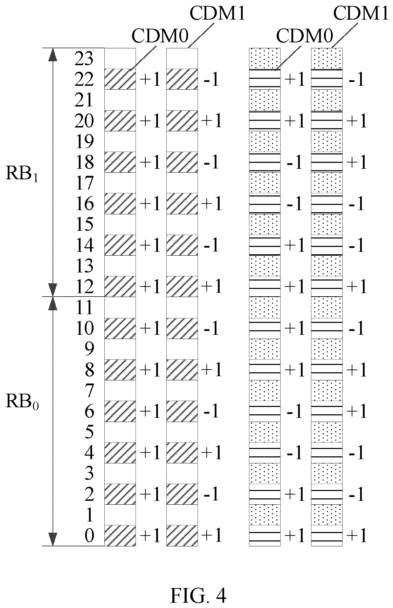

As shown in FIG. 3 and FIG. 4, a DMRS pattern with a single-symbol structure of the first configuration type includes two CDM groups: CDM group 0 and CDM group 1 corresponding to resource elements of different patterns, where CDM group 0 corresponding to resource elements of a diagonal image corresponds to port 0 and port 1, CDM group 1 corresponding to resource elements of a blank pattern corresponds to port 2 and port 3, CDM group 0 corresponding to resource elements of a horizontal-line image corresponds to port 8 and port 9, and CDM group 1 corresponding to resources of a dot image corresponds to port 10 and port 11.

Using CDM group 0 shown in FIG. 3 as an example, the first subsequence [+1, +1] is used as a basic unit and mapped to port 0 of the DMRS, the second subsequence [+1, -1] is used as a basic unit and mapped to port 1, the first subsequence [+1, +1] and the third subsequence [-1, -1] are used as basic units and mapped to port 8, and the second subsequence [+1, -1] and the fourth subsequence [-1, +1] are used as basic units and mapped to port 9. On port 0, the first subsequence [+1, +1] is mapped to every two adjacent subcarriers occupied by port 0; on port 1, the second subsequence [+1, -1] is mapped to every two adjacent subcarriers occupied by port 1; on port 8, the first subsequence [+1, +1] and the third subsequence [-1, -1] are alternately mapped in the form of the first mapping rule to every two adjacent subcarriers occupied by port 8; and on port 9, the second subsequence [+1, -1] and the fourth subsequence [-1, +1] are alternately mapped in the form of the first mapping rule to every two adjacent subcarriers occupied by port 9. FIG. 3 uses two resource blocks (RBs) as an example, but the method is applicable to any quantity of RBs.

In an implementation, in a case that the subsequence with the second length, that is, the subsequence with the length of 4, is the subsequence with the target length, the corresponding second mapping rule may be: sequentially mapping the subsequence with the second length to the subcarriers on the symbol occupied by the port by using the fifth subsequence, the sixth subsequence, the seventh subsequence, or the eighth subsequence as the basic unit respectively.

As shown in FIG. 3, using CDM group 0 as an example, the fifth subsequence [+1, +1, +1, +1] is used as a basic unit and mapped to port 0 of the DMRS, the sixth subsequence [+1, -1, +1, -1] is used as a basic unit and mapped to port 1, the seventh subsequence [+1, +1, -1, -1] is used as a basic unit and mapped to port 8, and the eighth subsequence [+1, -1, -1, +1] is used as a basic unit and mapped to port 9. The four subsequences with the second length are mapped in the form of the second mapping rule to subcarriers 0, 2, 4, and 6 of RB 0; or mapped to subcarriers 8 and 10 of RB 0, and subcarriers 12 and 14 of RB 1, where the mapping is resource mapping in a cross-RB form to resource elements (Resource element, RE) occupied by the DMRS; or mapped to subcarriers 16, 18, 20, and 22 of RB 1. FIG. 3 uses two RBs as an example, but the method is applicable to any quantity of RBs.

It should be understood that when the quantity of RBs is an odd number, for example, when a bandwidth occupied by a bandwidth part (BandWidth Part, BWP) is an odd quantity of RBs, or a bandwidth occupied by the DMRS is an odd quantity of RBs, the first subsequence [+1, +1] and the second subsequence [+1, -1] are mapped to two adjacent subcarriers with a largest index corresponding to a same CDM group among RBs with the largest index, where the first subsequence [+1, +1] is equivalent to first two elements of the fifth subsequence [+1, +1, +1, +1] and the seventh subsequence [+1, +1, -1, -1]; and the second subsequence [+1, -1] is equivalent to first two elements of the sixth subsequence [+1, -1, +1, -1] and the eighth subsequence [+1, - 1, -1, +1].

In an implementation, in a case that the subsequence with the third length, that is, the subsequence with the length of 6, is the subsequence with the target length, the corresponding second mapping rule may be: sequentially mapping the subsequence with the third length to the subcarriers on the symbol occupied by the port by using the fifth subsequence, the sixth subsequence, the seventh subsequence, or the eighth subsequence as the basic unit respectively.

As shown in FIG. 4, using CDM group 0 as an example, the ninth subsequence [+1, +1, +1, +1, +1, +1] is used as a basic unit and mapped to port 0 of the DMRS, the tenth subsequence [+1, -1, +1, -1, +1, -1] is used as a basic unit and mapped to port 1, the eleventh subsequence [+1, +1, -1, -1, +1, +1] is used as a basic unit and mapped to port 8, and the twelfth subsequence [+1, -1, -1, +1, +1, -1] is used as a basic unit and mapped to port 9. The foregoing four subsequences with the length of 6 are mapped in the form of the third mapping rule to six subcarriers of RB 0 and RB 1, that is, subcarriers 0, 2, 4, 6, 8, and 10 of RB 0 and subcarriers 12, 14, 16, 18, 20, and 22 of RB 1. FIG. 3 uses two RBs as an example, but the method is applicable to any quantity of RBs.

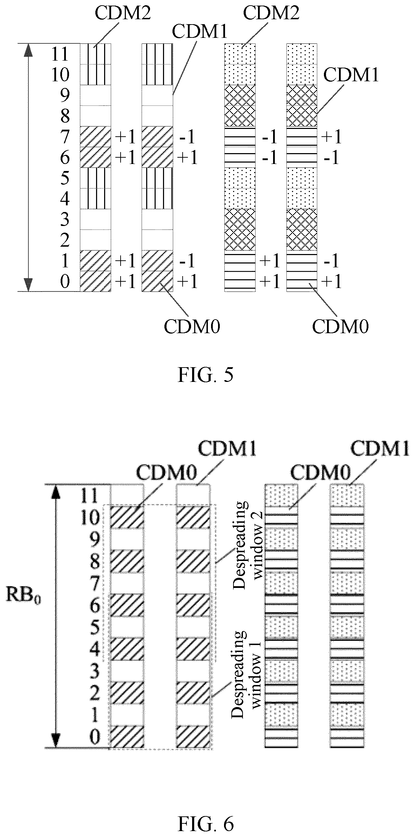

As shown in FIG. 5, a DMRS pattern with a single-symbol structure of the second configuration type includes three CDM groups: CDM group 0, CDM group 1, and CDM group 2 corresponding to resource elements of different patterns, where CDM group 0 corresponding to resource elements of a diagonal image corresponds to port 0 and port 1, CDM group 1 corresponding to resource elements of a blank pattern corresponds to port 2 and port 3, CDM group 2 corresponding to resource elements of a vertical-line pattern corresponds to port 4 and port 5, CDM group 0 corresponding to resource elements of a horizontal-line image corresponds to port 12 and port 13, CDM group 1 corresponding to resources of a cross image corresponds to port 14 and port 15, and CDM group 2 corresponding to resources of a point image corresponds to port 16 and port 17.

In an implementation, using CDM group 0 shown in FIG. 5 as an example, the first subsequence [+1, +1] is used as a basic unit and mapped to port 0 of the DMRS, the second subsequence [+1, -1] is used as a basic unit and mapped to port 1, the first subsequence [+1, +1] and the third subsequence [-1, -1] are used as basic units and mapped to port 12, and the second subsequence [+1, -1] and the fourth subsequence [-1, +1] are used as basic units and mapped to port 13. On port 0, the first subsequence [+1, +1] is mapped to every two adjacent subcarriers occupied by port 0; on port 1, the second subsequence [+1, -1] is mapped to every two adjacent subcarriers occupied by port 1; on port 12, the first subsequence [+1, +1] and the third subsequence [-1, -1] are alternately mapped in the form of the first mapping rule to every two adjacent subcarriers occupied by port 12; and on port 13, the second subsequence [+1, -1] and the fourth subsequence [-1, +1] are alternately mapped in the form of the first mapping rule to every two adjacent subcarriers occupied by port 13. FIG. 5 uses one RB as an example, but the method is applicable to any quantity of RBs.

In an implementation, using CDM group 0 as an example, the fifth subsequence [+1, +1, +1, +1] is used as a basic unit and mapped to port 0 of the DMRS, the sixth subsequence [+1, -1, +1, -1] is used as a basic unit and mapped to port 1, the seventh subsequence [+1, +1, -1, -1] is used as a basic unit and mapped to port 12, and the eighth subsequence [+1, -1, -1, +1] is used as a basic unit and mapped to port 13. In CDM group 0, the foregoing four subsequences with the second length are mapped in the form of the second mapping rule to four adjacent subcarriers 0, 1, 6, and 7 of RB 0. FIG. 5 uses one RB as an example, but the method is applicable to any quantity of RBs.

In an implementation, the frequency division cover code sequence is generated by using a start subcarrier of a common resource block (Common Resource Block, CRB) with a sequence number of 0 as a start position.

The start subcarrier is related to a CDM group. In an implementation, when the target DMRS is of the first configuration type, a frequency division cover code sequence corresponding to CDM group 0 is generated by using a first subcarrier of a common resource block with a sequence number of 0 as a start position; and a frequency division cover code sequence corresponding to CDM group 1 is generated by using a second subcarrier of the common resource block with the sequence number of 0 as a start position.

In another implementation, when the target DMRS is of the second configuration type, a frequency division cover code sequence corresponding to CDM group 0 is generated by using a first subcarrier of a common resource block with a sequence number of 0 as a start position; a frequency division cover code sequence corresponding to CDM group 1 is generated by using a third subcarrier of the common resource block with the sequence number of 0 as a start position; and a frequency division cover code sequence corresponding to CDM group 2 is generated by using a fifth subcarrier of the common resource block with the sequence number of 0 as a start position.

In an implementation, in a case that the frequency division cover code sequence is generated based on the subsequence with the first length or the subsequence with the second length as a basic unit, the target demodulation reference signal is a demodulation reference signal of the first configuration type or the second configuration type, where the first configuration type is related to demodulation reference signal configuration type 1, and the second configuration type is related to demodulation reference signal configuration type 2.

In another implementation, in a case that the frequency division cover code sequence is generated based on the subsequence with the third length as a basic unit, the target demodulation reference signal is of the first configuration type, where the first configuration type is related to demodulation reference signal configuration type 1.

Based on the subsequences with lengths of 2, 4, and 6 provided in this embodiment of this application, for a single-symbol DMRS, up to 8 ports can be supported for the first configuration type and up to 12 ports can be supported for the second configuration type; and for a dual-symbol DMRS, up to 16 ports can be supported for the first configuration type and up to 24 ports can be supported for the second configuration type. Compared with a quantity of ports supported by an existing DMRS, the quantity has doubled.

As can be learned from the technical solution of the foregoing embodiment, in this embodiment of this application, subsequences with a plurality of lengths are designed, and the subsequences are mapped to the port by using the subsequence with the target length as the basic unit, to generate the frequency division cover code sequences and then generate the target DMRS, so that the target DMRS can support more ports and that the transmitted data flows can be increased.

Based on the foregoing embodiment, further, in a case that the first communication device is a terminal and that the second communication device is a network-side device, the method further includes:
the terminal receives despreading indication information from the network-side device, where the despreading indication information is used to indicate corresponding despreading window information for the terminal for performing channel estimation on the target demodulation reference signal, and the despreading window information includes a despreading window length.

The despreading window length may be varied. In this embodiment of this application, only the despreading window length of 2 or 4 is used as an example for description.

In an implementation, step S220 includes:
the terminal performs channel estimation on the target demodulation reference signal based on the despreading window length.

In an implementation, in a case that the despreading window length is 2, for ports of the target demodulation reference signal that belong to a same code division multiplexing group, the terminal performs joint channel estimation by using two adjacent subcarriers occupied by the ports on the symbol as a despreading window.

In another implementation, in a case that the despreading window length is 4, for ports of the target demodulation reference signal that belong to a same code division multiplexing group, the terminal performs joint channel estimation by using four adjacent subcarriers occupied by the ports on the symbol as a despreading window.

FIG. 6 shows a DMRS pattern with a single-symbol structure of the first configuration type. When the despreading window length is 4, a channel estimation mode of a DMRS of a terminal is shown in FIG. 6. Using channel estimation on CDM group 0 as an example, joint channel estimation is performed once in despreading window 1 based on four adjacent subcarriers, and joint channel estimation is performed once in despreading window 2 based on four adjacent subcarriers, that is, channel estimation is performed based on two despreading windows in one RB.

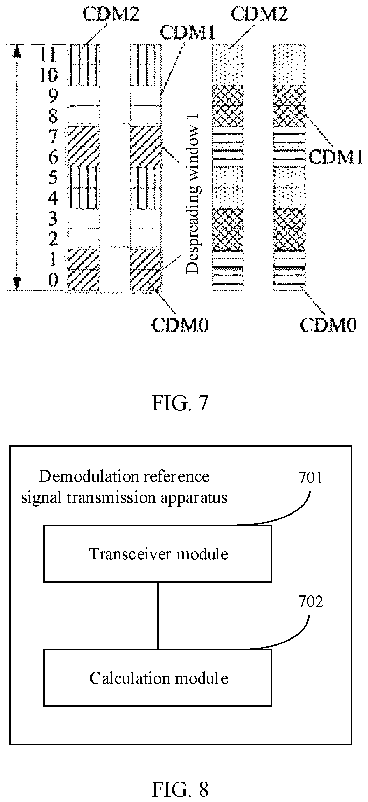

FIG. 7 shows a DMRS pattern with a single-symbol structure of the second configuration type. When the despreading window length is 4, a channel estimation mode of a DMRS of a terminal device is shown in FIG. 6. Using channel estimation on CDM group 0 as an example, joint channel estimation is performed once in despreading window 1 based on four adjacent subcarriers corresponding to CDM group 0.

Because frequency division cover codes in the despreading window are orthogonal to each other, four DMRS ports belonging to a same CDM group are orthogonal to each other to ensure performance of channel estimation.

It can be learned that the frequency division cover codes generated based on the subsequence with the target length as the basic unit can implement code division multiplexing among more DMRS ports, so that a CDM group includes more mutually orthogonal DMRS ports.

In an implementation, before the terminal receives the despreading indication information from the network-side device, the method further includes:
the terminal reports a channel estimation capability of the terminal to the network-side device.

In an implementation, the channel estimation capability is used to indicate whether the terminal supports channel estimation on the demodulation reference signal based on the despreading window length of 4.

As can be learned from the technical solution of the foregoing embodiment, in this embodiment of this application, the despreading indication information is sent to the terminal, so that the terminal performs channel estimation on the DMRS based on the despreading window length. Therefore, channel estimation on the target DMRS is more accurate.

In an implementation, in a case that the first communication device is a terminal and that the second communication device is a network-side device, before the terminal receives the target demodulation reference signal from the network-side device, the method further includes:
the terminal reports a downlink data receiving capability supported by the terminal to the network-side device, where the downlink data receiving capability includes a capability of a type of a quantity of RBs on a physical downlink shared channel (Physical Downlink Shared Channel, PDSCH) supported by the terminal.

In an implementation, the type of the quantity of RBs on the PDSCH includes one of the following:
the quantity of RBs on the PDSCH is an even number; and
the quantity of RBs on the PDSCH is an odd number or an even number, that is, parity of the quantity of RBs on the PDSCH is not limited.

In an implementation, the terminal receives target configuration information from the network-side device, where the target configuration information corresponds to the downlink data receiving capability reported by the terminal, and the target configuration information is used to indicate the type of the quantity of RBs on the PDSCH received by the terminal.

For example, when the terminal reports that the terminal supports only an even number of RBs on the PDSCH, the network-side device may send target configuration information to indicate to the terminal that quantities of RBs subsequently transmitted on the PDSCH are all even numbers. In this case, the terminal may demodulate the PDSCH by using a corresponding channel estimation method. Alternatively, when the terminal reports that the terminal can support an odd number or even number of RBs on the PDSCH, the network-side device may send target configuration information to indicate to the terminal that quantities of RBs subsequently transmitted on the PDSCH are all even numbers or are not limited (that is, the quantities of RBs may be even numbers or odd numbers). In this case, the terminal may demodulate the PDSCH based on the target configuration information by using a corresponding channel estimation method.

When the quantity of RBs on the PDSCH is an odd number, the terminal may perform channel estimation based on two despreading windows in one RB, to resolve a problem of channel estimation when the quantity of RBs on the PDSCH is an odd number. In other words, if the terminal supports channel estimation based on two despreading windows in one RB, the terminal may support that the quantity of RBs on the PDSCH received by the terminal is an odd number. It should be noted that channel estimation based on two despreading windows in one RB is only one of channel estimation methods performed by the terminal. Other methods for performing channel estimation on the PDSCH, which may enable the terminal to support an odd number of RBs received by the terminal, are not precluded.

As can be learned from the technical solution of the foregoing embodiment, in this embodiment of this application, the type of the quantity of RBs on the PDSCH is determined by the downlink data receiving capability reported by the terminal, so that performance of channel estimation is improved.

The demodulation reference signal transmission method provided in this embodiment of this application may be performed by a demodulation reference signal transmission apparatus. A demodulation reference signal transmission apparatus provided in an embodiment of this application is described by assuming that the demodulation reference signal transmission method in this embodiment of this application is performed by the demodulation reference signal transmission apparatus.

As shown in FIG. 8, the demodulation reference signal transmission apparatus includes a transceiver module 701 and a calculation module 702.

The transceiver module 701 is configured to receive a target demodulation reference signal from a second communication device; and the calculation module 702 is configured to perform channel estimation on the target demodulation reference signal, where the target demodulation reference signal is generated based on N frequency division cover code sequences, the N frequency division cover code sequences are generated based on a subsequence with a target length as a basic unit and according to a resource mapping rule corresponding to the subsequence with the target length, the frequency division cover code sequence is used for code division multiplexing of a port of the target demodulation reference signal, and N is a positive integer.

As can be learned from the technical solution of the foregoing embodiment, in this embodiment of this application, the N frequency division cover code sequences are generated based on the subsequence with the target length as the basic unit and according to the resource mapping rule corresponding to the subsequence with the target length; and the target demodulation reference signal is generated based on the N frequency division cover code sequences, and sent for channel estimation, so that the target DMRS can support more ports and that transmitted data flows can be increased.

Based on the foregoing embodiment, further, the subsequence with the target length is one of the following:
a subsequence with a first length;
a subsequence with a second length; and
a subsequence with a third length, where
the first length is 2, the second length is 4, and the third length is 6.

Further, the frequency division cover code sequence is generated in one of the following manners:
by using the subsequence with the first length as a basic unit, mapping the subsequence with the first length in a form of a first mapping rule to two subcarriers on a symbol occupied by the port, where the two subcarriers belong to a same RB;
by using the subsequence with the second length as a basic unit, mapping the subsequence with the second length in a form of a second mapping rule to four subcarriers on the symbol occupied by the port, where the four subcarriers belong to a same RB or two RBs; and
by using the subsequence with the third length as a basic unit, mapping the subsequence with the third length in a form of a third mapping rule to six subcarriers on the symbol occupied by the port, where the six subcarriers belong to a same RB.

Further, the subsequence with the first length is at least one of the following:
a first subsequence [+1, +1];
a second subsequence [+1, -1];
a third subsequence [-1, -1]; and
a fourth subsequence [-1, +1].

Further, the subsequence with the second length is at least one of the following:
a fifth subsequence [+1, +1, +1, +1];
a sixth subsequence [+1, -1, +1, -1];
a seventh subsequence [+1, +1, -1, -1]; and
an eighth subsequence [+1, -1, -1, +1].

Further, the subsequence with the third length is at least one of the following:
a ninth subsequence [+1, +1, +1, +1, +1, +1];
a tenth subsequence [+1, -1, +1, -1, +1, -1];
an eleventh subsequence [+1, +1, -1, -1, +1, +1]; and
a twelfth subsequence [+1, -1, -1, +1, +1, -1].

Further, in a case that the frequency division cover code sequence is generated based on the first subsequence and the third subsequence as basic units, the first mapping rule is to alternately map the first subsequence and the third subsequence to subcarriers on the symbol occupied by the port.

Further, in a case that the frequency division cover code sequence is generated based on the second subsequence and the fourth subsequence as basic units, the first mapping rule is to alternately map the second subsequence and the fourth subsequence to subcarriers on the symbol occupied by the port.

Further, the frequency division cover code sequence is generated by using a start subcarrier of a common resource block with a sequence number of 0 as a start position.

Further, in a case that the frequency division cover code sequence is generated based on the subsequence with the first length or the subsequence with the second length as a basic unit, the target demodulation reference signal is a demodulation reference signal of a first configuration type or a second configuration type, where the first configuration type is related to demodulation reference signal configuration type 1, and the second configuration type is related to demodulation reference signal configuration type 2.

Further, in a case that the frequency division cover code sequence is generated based on the subsequence with the third length as a basic unit, the target demodulation reference signal is of a first configuration type, where the first configuration type is related to demodulation reference signal configuration type 1.

As can be learned from the technical solution of the foregoing embodiment, in this embodiment of this application, subsequences with a plurality of lengths are designed, and the subsequences are mapped to the port by using the subsequence with the target length as the basic unit, to generate the frequency division cover code sequences and then generate the target DMRS, so that the target DMRS can support more ports and that the transmitted data flows can be increased.

Based on the foregoing embodiment, further, in a case that the first communication device is a terminal and that the second communication device is a network-side device, the transceiver module 701 is further configured to:
receive despreading indication information from the network-side device, where the despreading indication information is used to indicate corresponding despreading window information for the terminal for performing channel estimation on the target demodulation reference signal, and the despreading window information includes a despreading window length.

Further, the calculation module 702 is configured to perform channel estimation on the target demodulation reference signal based on the despreading window length.

Further, the despreading window length is 2 or 4.

Further, the calculation module 702 is configured to perform at least one of the following:
in a case that the despreading window length is 2, for ports of the target demodulation reference signal that belong to a same code division multiplexing group, performing joint channel estimation by using two adjacent subcarriers occupied by the ports on the symbol as a despreading window; or
in a case that the despreading window length is 4, for ports of the target demodulation reference signal that belong to a same code division multiplexing group, performing joint channel estimation by using four adjacent subcarriers occupied by the ports on the symbol as a despreading window.

Further, before receiving the despreading indication information from the network-side device, the transceiver module 701 is further configured to report a channel estimation capability of the terminal to the network-side device.

Further, the channel estimation capability is used to indicate whether the terminal supports channel estimation on the demodulation reference signal based on the despreading window length of 4.

As can be learned from the technical solution of the foregoing embodiment, in this embodiment of this application, the despreading indication information is sent to the terminal, so that the terminal performs channel estimation on the DMRS based on the despreading window length. Therefore, channel estimation on the target DMRS is more accurate.

Based on the foregoing embodiment, further, in a case that the first communication device is a terminal and that the second communication device is a network-side device, before receiving the target demodulation reference signal from the network-side device, the transceiver module 701 is further configured to report a downlink data receiving capability supported by the terminal to the network-side device, where the downlink data receiving capability includes a capability of a type of a quantity of RBs on a PDSCH supported by the terminal.

Further, the type of the quantity of RBs on the PDSCH includes one of the following:
the quantity of RBs on the PDSCH is an even number; and
the quantity of RBs on the PDSCH is an odd number or an even number.

Further, the transceiver module 701 is further configured to receive target configuration information from the network-side device, where the target configuration information corresponds to the downlink data receiving capability reported by the terminal, and the target configuration information is used to indicate the type of the quantity of RBs on the PDSCH received by the terminal.

As can be learned from the technical solution of the foregoing embodiment, in this embodiment of this application, the type of the quantity of RBs on the PDSCH is determined by the downlink data receiving capability reported by the terminal, so that performance of channel estimation is improved.

The demodulation reference signal transmission apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The demodulation reference signal transmission apparatus provided in this embodiment of this application can implement each process implemented in the method embodiments in FIG. 2 to FIG. 7, with the same technical effect achieved. To avoid repetition, details are not described herein again.

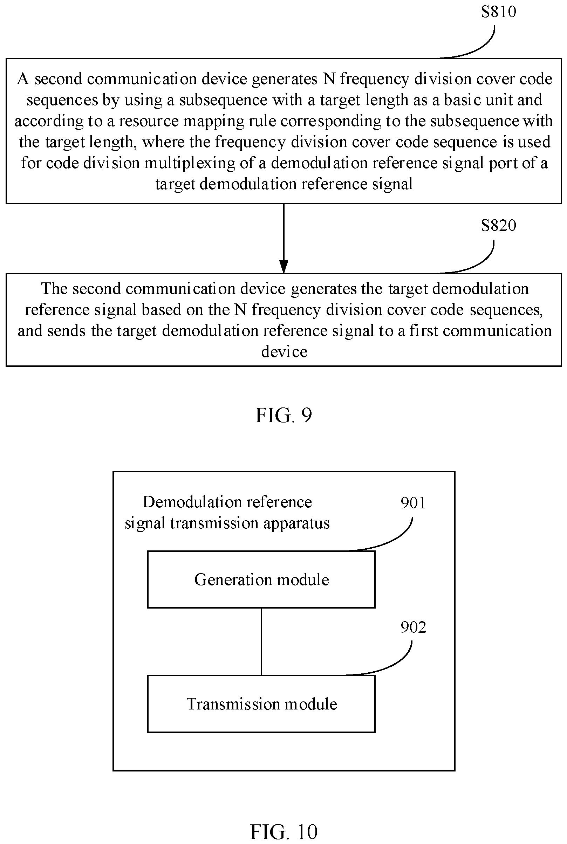

As shown in FIG. 9, an embodiment of this application provides a demodulation reference signal transmission method. The method is performed by a second communication device. The second communication device may be a network-side device or a terminal. In other words, the method may be performed by software or hardware installed in the second communication device. The method includes the following steps.

S810. The second communication device generates N frequency division cover code sequences by using a subsequence with a target length as a basic unit and according to a resource mapping rule corresponding to the subsequence with the target length, where the frequency division cover code sequence is used for code division multiplexing of a demodulation reference signal port of a target demodulation reference signal.

S820. The second communication device generates the target demodulation reference signal based on the N frequency division cover code sequences, and sends the target demodulation reference signal to a first communication device, where
N is a positive integer.

Steps S810 and S820 can implement the method embodiment shown in FIG. 2, with the same technical effect achieved. To avoid repetition, details are not described herein again.

As can be learned from the technical solution of the foregoing embodiment, in this embodiment of this application, the N frequency division cover code sequences are generated based on the subsequence with the target length as the basic unit and according to the resource mapping rule corresponding to the subsequence with the target length; and the target demodulation reference signal is generated based on the N frequency division cover code sequences, and sent for channel estimation, so that the target DMRS can support more ports and that transmitted data flows can be increased.

Based on the foregoing embodiment, further, the subsequence with the target length is one of the following:
a subsequence with a first length;
a subsequence with a second length; and
a subsequence with a third length, where
the first length is 2, the second length is 4, and the third length is 6.

Further, step S810 includes one of the following manners:
by using the subsequence with the first length as a basic unit, mapping the subsequence with the first length in a form of a first mapping rule to two subcarriers on a symbol occupied by the port, where the two subcarriers belong to a same RB;
by using the subsequence with the second length as a basic unit, mapping the subsequence with the second length in a form of a second mapping rule to four subcarriers on the symbol occupied by the port, where the four subcarriers belong to a same RB or two RBs; and
by using the subsequence with the third length as a basic unit, mapping the subsequence with the third length in a form of a third mapping rule to six subcarriers on the symbol occupied by the port, where the six subcarriers belong to a same RB.

Further, the subsequence with the first length is at least one of the following:
a first subsequence [+1, +1];
a second subsequence [+1, -1];
a third subsequence [-1, -1]; and
a fourth subsequence [-1, +1].

Further, the subsequence with the second length is at least one of the following:
a fifth subsequence [+1, +1, +1, +1];
a sixth subsequence [+1, -1, +1, -1];
a seventh subsequence [+1, +1, -1, -1]; and
an eighth subsequence [+1, -1, -1, +1].

Further, the subsequence with the third length is at least one of the following:
a ninth subsequence [+1, +1, +1, +1, +1, +1];
a tenth subsequence [+1, -1, +1, -1, +1, -1];
an eleventh subsequence [+1, +1, -1, -1, +1, +1]; and
a twelfth subsequence [+1, -1, -1, +1, +1, -1].

Further, in a case that the frequency division cover code sequence is generated based on the first subsequence and the third subsequence as basic units, the first mapping rule is to alternately map the first subsequence and the third subsequence to subcarriers on the symbol occupied by the port.

Further, in a case that the frequency division cover code sequence is generated based on the second subsequence and the fourth subsequence as basic units, the first mapping rule is to alternately map the second subsequence and the fourth subsequence to subcarriers on the symbol occupied by the port.

Further, the frequency division cover code sequence is generated by using a start subcarrier of a common resource block with a sequence number of 0 as a start position.

Further, in a case that the frequency division cover code sequence is generated based on the subsequence with the first length or the subsequence with the second length as a basic unit, the target demodulation reference signal is a demodulation reference signal of a first configuration type or a second configuration type, where the first configuration type is related to demodulation reference signal configuration type 1, and the second configuration type is related to demodulation reference signal configuration type 2.

Further, in a case that the frequency division cover code sequence is generated based on the subsequence with the third length as a basic unit, the demodulation reference signal is of a first configuration type, where the first configuration type is related to demodulation reference signal configuration type 1.

As can be learned from the technical solution of the foregoing embodiment, in this embodiment of this application, subsequences with a plurality of lengths are designed, and the subsequences are mapped to the port by using the subsequence with the target length as the basic unit, to generate the frequency division cover code sequences and then generate the target DMRS, so that the target DMRS can support more ports and that the transmitted data flows can be increased.

Based on the foregoing embodiment, further, in a case that the first communication device is a terminal and that the second communication device is a network-side device, the method further includes:
the network-side device sends despreading indication information to the terminal, where the despreading indication information is used to indicate corresponding despreading window information for the terminal for performing channel estimation on the target demodulation reference signal, and the despreading window information includes a despreading window length.

Further, the despreading window length is 2 or 4.

Further, before the network-side device sends the despreading indication information to the terminal, the method further includes:
the network-side device receives a channel estimation capability of the terminal from the terminal.

Further, the channel estimation capability is used to indicate whether the terminal supports channel estimation on the demodulation reference signal based on the despreading window length of 4.

As can be learned from the technical solution of the foregoing embodiment, in this embodiment of this application, the despreading indication information is sent to the terminal, so that the terminal performs channel estimation on the DMRS based on the despreading window length. Therefore, channel estimation on the target DMRS is more accurate.

Based on the foregoing embodiment, further, in a case that the first communication device is a terminal and that the second communication device is a network-side device, before the network-side device sends the target demodulation reference signal to the terminal, the method further includes:
the network-side device receives from the terminal, a downlink data receiving capability supported by the terminal, where the downlink data receiving capability includes a capability of a type of a quantity of RBs on a PDSCH supported by the terminal.

Further, the type of the quantity of RBs on the PDSCH includes one of the following:
the quantity of RBs on the PDSCH is an even number; and
the quantity of RBs on the PDSCH is an odd number or an even number.

Further, the network-side device sends target configuration information to the terminal, where the target configuration information corresponds to the downlink data receiving capability supported by the terminal and received by the network-side device from the terminal, and the target configuration information is used to indicate the type of the quantity of RBs on the PDSCH received by the terminal.

The demodulation reference signal transmission method provided in this embodiment of this application may be performed by a demodulation reference signal transmission apparatus. A demodulation reference signal transmission apparatus provided in an embodiment of this application is described by assuming that the demodulation reference signal transmission method in this embodiment of this application is performed by the demodulation reference signal transmission apparatus.

As shown in FIG. 10, the demodulation reference signal transmission apparatus includes a generation module 901 and a transmission module 902.

The generation module 901 is configured to generate N frequency division cover code sequences by using a subsequence with a target length as a basic unit and according to a resource mapping rule corresponding to the subsequence with the target length, where the frequency division cover code sequence is used for code division multiplexing of a demodulation reference signal port of a target demodulation reference signal; and the transmission module 902 is configured to generate the target demodulation reference signal based on the N frequency division cover code sequences, and send the target demodulation reference signal to a first communication device, where N is a positive integer.

As can be learned from the technical solution of the foregoing embodiment, in this embodiment of this application, the N frequency division cover code sequences are generated based on the subsequence with the target length as the basic unit and according to the resource mapping rule corresponding to the subsequence with the target length; and the target demodulation reference signal is generated based on the N frequency division cover code sequences, and sent for channel estimation, so that the target DMRS can support more ports and that transmitted data flows can be increased.

Based on the foregoing embodiment, further, the subsequence with the target length is one of the following:
a subsequence with a first length;
a subsequence with a second length; and
a subsequence with a third length, where
the first length is 2, the second length is 4, and the third length is 6.

Further, the generation module 901 is configured to perform one of the following manners:
by using the subsequence with the first length as a basic unit, mapping the subsequence with the first length in a form of a first mapping rule to two subcarriers on a symbol occupied by the port, where the two subcarriers belong to a same RB;
by using the subsequence with the second length as a basic unit, mapping the subsequence with the second length in a form of a second mapping rule to four subcarriers on the symbol occupied by the port, where the four subcarriers belong to a same RB or two RBs; and
by using the subsequence with the third length as a basic unit, mapping the subsequence with the third length in a form of a third mapping rule to six subcarriers on the symbol occupied by the port, where the six subcarriers belong to a same RB.

Further, the subsequence with the first length is at least one of the following:
a first subsequence [+1, +1];
a second subsequence [+1, -1];
a third subsequence [-1, -1]; and
a fourth subsequence [-1, +1].

Further, the subsequence with the second length is at least one of the following:
a fifth subsequence [+1, +1, +1, +1];
a sixth subsequence [+1, -1, +1, -1];
a seventh subsequence [+1, +1, -1, -1]; and
an eighth subsequence [+1, -1, -1, +1].

Further, the subsequence with the third length is at least one of the following:
a ninth subsequence [+1, +1, +1, +1, +1, +1];
a tenth subsequence [+1, -1, +1, -1, +1, -1];
an eleventh subsequence [+1, +1, -1, -1, +1, +1]; and
a twelfth subsequence [+1, -1, -1, +1, +1, -1].

Further, in a case that the frequency division cover code sequence is generated based on the first subsequence and the third subsequence as basic units, the first mapping rule is to alternately map the first subsequence and the third subsequence to subcarriers on the symbol occupied by the port.

Further, in a case that the frequency division cover code sequence is generated based on the second subsequence and the fourth subsequence as basic units, the first mapping rule is to alternately map the second subsequence and the fourth subsequence to subcarriers on the symbol occupied by the port.

Further, the frequency division cover code sequence is generated by using a start subcarrier of a common resource block with a sequence number of 0 as a start position.

Further, in a case that the frequency division cover code sequence is generated based on the subsequence with the first length or the subsequence with the second length as a basic unit, the target demodulation reference signal is a demodulation reference signal of a first configuration type or a second configuration type, where the first configuration type is related to demodulation reference signal configuration type 1, and the second configuration type is related to demodulation reference signal configuration type 2.

Further, in a case that the frequency division cover code sequence is generated based on the subsequence with the third length as a basic unit, the demodulation reference signal is of a first configuration type, where the first configuration type is related to demodulation reference signal configuration type 1.

As can be learned from the technical solution of the foregoing embodiment, in this embodiment of this application, subsequences with a plurality of lengths are designed, and the subsequences are mapped to the port by using the subsequence with the target length as the basic unit, to generate the frequency division cover code sequences and then generate the target DMRS, so that the target DMRS can support more ports and that the transmitted data flows can be increased.

Based on the foregoing embodiment, further, in a case that the first communication device is a terminal and that the second communication device is a network-side device, the transmission module 902 is further configured to send despreading indication information to the terminal, where the despreading indication information is used to indicate corresponding despreading window information for the terminal for performing channel estimation on the target demodulation reference signal, and the despreading window information includes a despreading window length.

Further, the despreading window length is 2 or 4.

Further, the transmission module 902 is further configured to receive a channel estimation capability of the terminal from the terminal.

Further, the channel estimation capability is used to indicate whether the terminal supports channel estimation on the demodulation reference signal based on the despreading window length of 4.

As can be learned from the technical solution of the foregoing embodiment, in this embodiment of this application, the despreading indication information is sent to the terminal, so that the terminal performs channel estimation on the DMRS based on the despreading window length. Therefore, channel estimation on the target DMRS is more accurate.

Based on the foregoing embodiment, further, in a case that the first communication device is a terminal and that the second communication device is a network-side device, the transmission module 902 is further configured to receive a downlink data receiving capability supported by the terminal, where the downlink data receiving capability includes a capability of a type of a quantity of RBs on a physical downlink shared channel PDSCH supported by the terminal.

Further, the type of the quantity of RBs on the PDSCH includes one of the following:
the quantity of RBs on the PDSCH is an even number; and
the quantity of RBs on the PDSCH is an odd number or an even number.

Further, the transmission module 902 is further configured to send target configuration information to the terminal, where the target configuration information corresponds to the downlink data receiving capability supported by the terminal and received by the network-side device from the terminal, and the target configuration information is used to indicate the type of the quantity of RBs on the PDSCH received by the terminal.

The demodulation reference signal transmission apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The demodulation reference signal transmission apparatus provided in this embodiment of this application can implement each process implemented in the method embodiment in FIG. 9, with the same technical effect achieved. To avoid repetition, details are not described herein again.

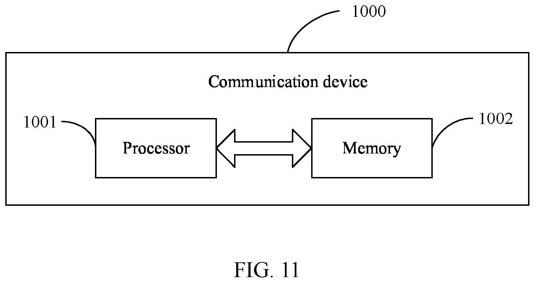

Optionally, as shown in FIG. 11, an embodiment of this application further provides a communication device 1000, including a processor 1001 and a memory 1002. The memory 1002 stores a program or instructions capable of running on the processor 1001. For example, when the communication device 1000 is a terminal, and the program or instructions are executed by the processor 1001, the steps of the foregoing embodiment of the demodulation reference signal transmission method are implemented, with the same technical effect achieved. When the communication device 1000 is a network-side device, and the program or instructions are executed by the processor 1001, the steps of the foregoing embodiment of the demodulation reference signal transmission method are implemented, with the same technical effect achieved. To avoid repetition, details are not described herein again.

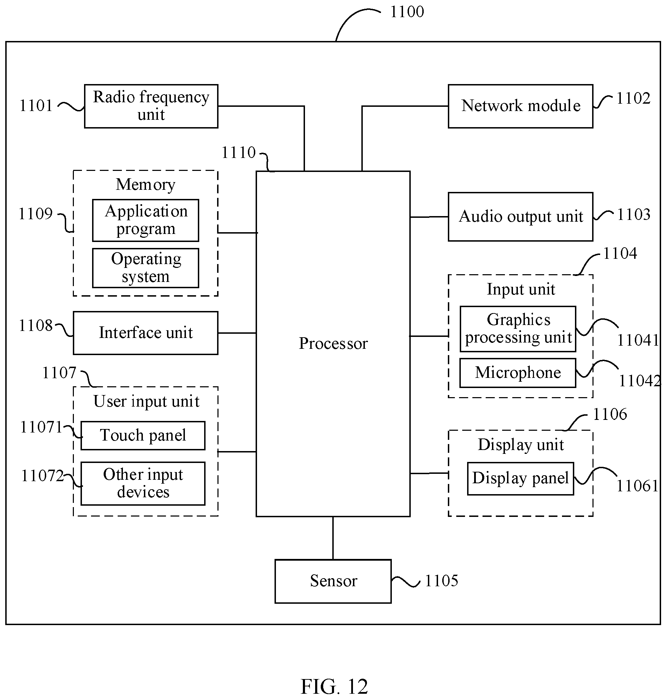

An embodiment of this application further provides a terminal, including a processor and a communication interface. The communication interface is configured to receive a target demodulation reference signal from a second communication device, and the processor is configured to perform channel estimation on the target demodulation reference signal. The terminal embodiment corresponds to the foregoing terminal-side method embodiment, and each implementation process and implementation of the foregoing method embodiment can be applied to the terminal embodiment, with the same technical effect achieved. Specifically, FIG. 12 is a schematic diagram of a hardware structure of a terminal for implementing an embodiment of this application.

The terminal 1100 includes but is not limited to at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (for example, a battery) supplying power to all components. The power supply may be logically connected to the processor 1110 through a power management system. In this way, functions such as charge management, discharge management, and power consumption management are implemented by using the power management system. The terminal structure shown in FIG. 12 does not constitute a limitation on the terminal. The terminal may include more or fewer components than those shown in the figure, or some components are combined, or component arrangements are different. Details are not described herein again.

It should be understood that, in this embodiment of this application, the input unit 1104 may include a graphics processing unit (Graphics Processing Unit, GPU) 11041 and a microphone 11042. The GPU 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1101 may transmit the downlink data to the processor 1110 for processing. In addition, the radio frequency unit 1101 may send uplink data to the network-side device. Usually, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may primarily include a first storage area for storing programs or instructions and a second storage area for storing data. The first storage area may store an operating system, an application program or instructions required by at least one function (such as an audio play function and an image play function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1109 in this embodiment of this application includes but is not limited to these and any other suitable types of memories.

The processor 1110 may include one or more processing units. Optionally, the processor 1110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1110.

The radio frequency unit 1101 is configured to receive a target demodulation reference signal from a second communication device; and
the processor 1110 is configured to perform channel estimation on the target demodulation reference signal, where
the target demodulation reference signal is generated based on N frequency division cover code sequences, the N frequency division cover code sequences are generated based on a subsequence with a target length as a basic unit and according to a resource mapping rule corresponding to the subsequence with the target length, the frequency division cover code sequence is used for code division multiplexing of a port of the target demodulation reference signal, and N is a positive integer.

As can be learned from the technical solution of the foregoing embodiment, in this embodiment of this application, the N frequency division cover code sequences are generated based on the subsequence with the target length as the basic unit and according to the resource mapping rule corresponding to the subsequence with the target length; and the target demodulation reference signal is generated based on the N frequency division cover code sequences, and sent for channel estimation, so that the target DMRS can support more ports and that transmitted data flows can be increased.

Based on the foregoing embodiment, further, the subsequence with the target length is one of the following:
a subsequence with a first length;
a subsequence with a second length; and
a subsequence with a third length, where
the first length is 2, the second length is 4, and the third length is 6.

Further, the frequency division cover code sequence is generated in one of the following manners:
by using the subsequence with the first length as a basic unit, mapping the subsequence with the first length in a form of a first mapping rule to two subcarriers on a symbol occupied by the port, where the two subcarriers belong to a same RB;
by using the subsequence with the second length as a basic unit, mapping the subsequence with the second length in a form of a second mapping rule to four subcarriers on the symbol occupied by the port, where the four subcarriers belong to a same RB or two RBs; and
by using the subsequence with the third length as a basic unit, mapping the subsequence with the third length in a form of a third mapping rule to six subcarriers on the symbol occupied by the port, where the six subcarriers belong to a same RB.

Further, the subsequence with the first length is at least one of the following:
a first subsequence [+1, +1];
a second subsequence [+1, -1];
a third subsequence [-1, -1]; and
a fourth subsequence [-1, +1].

Further, the subsequence with the second length is at least one of the following:
a fifth subsequence [+1, +1, +1, +1];
a sixth subsequence [+1, -1, +1, -1];
a seventh subsequence [+1, +1, -1, -1]; and
an eighth subsequence [+1, -1, -1, +1].

Further, the subsequence with the third length is at least one of the following:
a ninth subsequence [+1, +1, +1, +1, +1, +1];
a tenth subsequence [+1, -1, +1, -1, +1, -1];
an eleventh subsequence [+1, +1, -1, -1, +1, +1]; and
a twelfth subsequence [+1, -1, -1, +1, +1, -1].

Further, in a case that the frequency division cover code sequence is generated based on the first subsequence and the third subsequence as basic units, the first mapping rule is to alternately map the first subsequence and the third subsequence to subcarriers on the symbol occupied by the port.

Further, in a case that the frequency division cover code sequence is generated based on the second subsequence and the fourth subsequence as basic units, the first mapping rule is to alternately map the second subsequence and the fourth subsequence to subcarriers on the symbol occupied by the port.

Further, the frequency division cover code sequence is generated by using a start subcarrier of a common resource block with a sequence number of 0 as a start position.

Further, in a case that the frequency division cover code sequence is generated based on the subsequence with the first length or the subsequence with the second length as a basic unit, the target demodulation reference signal is a demodulation reference signal of a first configuration type or a second configuration type, where the first configuration type is related to demodulation reference signal configuration type 1, and the second configuration type is related to demodulation reference signal configuration type 2.

Further, in a case that the frequency division cover code sequence is generated based on the subsequence with the third length as a basic unit, the target demodulation reference signal is of a first configuration type, where the first configuration type is related to demodulation reference signal configuration type 1.

This embodiment of this application enables the target DMRS to support more ports and increase transmitted data flows.

Based on the foregoing embodiment, further, in a case that the first communication device is a terminal and that the second communication device is a network-side device, the radio frequency unit 1101 is further configured to:
receive despreading indication information from the network-side device, where the despreading indication information is used to indicate corresponding despreading window information for the terminal for performing channel estimation on the target demodulation reference signal, and the despreading window information includes a despreading window length.

Further, the processor 1110 is configured to perform channel estimation on the target demodulation reference signal based on the despreading window length.

Further, the despreading window length is 2 or 4.

Further, the processor 1110 is configured to perform at least one of the following:
in a case that the despreading window length is 2, for ports of the target demodulation reference signal that belong to a same code division multiplexing group, performing joint channel estimation by using two adjacent subcarriers occupied by the ports on the symbol as a despreading window; or
in a case that the despreading window length is 4, for ports of the target demodulation reference signal that belong to a same code division multiplexing group, performing joint channel estimation by using four adjacent subcarriers occupied by the ports on the symbol as a despreading window.

Further, before the terminal receives the despreading indication information from the network-side device, the radio frequency unit 1101 is further configured to report a channel estimation capability of the terminal to the network-side device.

Further, the channel estimation capability is used to indicate whether the terminal supports channel estimation on the demodulation reference signal based on the despreading window length of 4.

Based on the foregoing embodiment, further, in a case that the first communication device is a terminal and that the second communication device is a network-side device, before the terminal receives the target demodulation reference signal from the network-side device, the radio frequency unit 1101 is further configured to report a downlink data receiving capability supported by the terminal to the network-side device, where the downlink data receiving capability includes a capability of a type of a quantity of RBs on a physical downlink shared channel PDSCH supported by the terminal.

Further, the type of the quantity of RBs on the PDSCH includes one of the following:
the quantity of RBs on the PDSCH is an even number; and
the quantity of RBs on the PDSCH is an odd number or an even number.

Further, the radio frequency unit 1101 is further configured to receive target configuration information from the network-side device, where the target configuration information corresponds to the downlink data receiving capability reported by the terminal, and the target configuration information is used to indicate the type of the quantity of RBs on the PDSCH received by the terminal.

This embodiment of this application enables channel estimation on the target DMRS to be more accurate.

An embodiment of this application further provides a network-side device, including a processor and a communication interface. The processor is configured to generate N frequency division cover code sequences by using a subsequence with a target length as a basic unit and according to a resource mapping rule corresponding to the subsequence with the target length, where the frequency division cover code sequence is used for code division multiplexing of a demodulation reference signal port of a target demodulation reference signal; and the communication interface is configured to generate the target demodulation reference signal based on the N frequency division cover code sequences, and send the target demodulation reference signal to a first communication device. The network-side device embodiment corresponds to the foregoing method embodiment of the network-side device, and each implementation process and implementation of the foregoing method embodiment can be applied to the network-side device embodiment, with the same technical effect achieved.

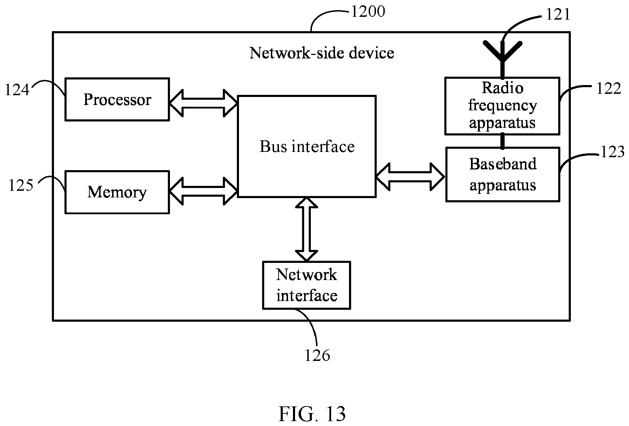

Specifically, an embodiment of this application further provides a network-side device. As shown in FIG. 13, the network-side device 1200 includes an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information out by using the antenna 121.

The method performed by the network-side device in the foregoing embodiment may be implemented in the baseband apparatus 123. The baseband apparatus 123 includes a baseband processor.

The baseband apparatus 123 may include, for example, at least one baseband unit, where a plurality of chips are disposed on the baseband unit. As shown in FIG. 13, one of the chips is, for example, the baseband processor, connected to the memory 125 by using a bus interface, to invoke a program in the memory 125 to perform the operation of the network device shown in the foregoing method embodiment.

The network-side device may further include a network interface 126, where the interface is, for example, a common public radio interface (common public radio interface, CPRI).

Specifically, the network-side device 1200 in this embodiment of the present invention further includes a program or instructions stored in the memory 125 and capable of running on the processor 124. When the processor 124 invokes the program or instructions in the memory 125, the method performed by each module shown in FIG. 7 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the demodulation reference signal transmission method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the embodiment of the demodulation reference signal transmission method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing demodulation reference signal transmission method embodiment, with the same technical effect achieved. To avoid repetition, details are not described herein again.

An embodiment of this application further provides a demodulation reference signal transmission system, including a terminal and a network-side device. The terminal may be configured to perform the steps of the foregoing demodulation reference signal transmission method. The network-side device may be configured to perform the steps of the foregoing demodulation reference signal transmission method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A demodulation reference signal transmission method, comprising:
receiving, by a first communication device, a target demodulation reference signal from a second communication device; and
performing, by the first communication device, channel estimation on the target demodulation reference signal, wherein
the target demodulation reference signal is generated with N frequency division cover code sequences, the N frequency division cover code sequences are generated based on a subsequence with a target length as a basic unit and according to a resource mapping rule corresponding to the subsequence with the target length, the frequency division cover code sequence is used for code division multiplexing of a port of the target demodulation reference signal, and N is a positive integer.

2. The method according to claim 1, wherein the subsequence with the target length is one of the following:
a subsequence with a first length;
a subsequence with a second length; and
a subsequence with a third length, wherein
the first length is 2, the second length is 4, and the third length is 6.

3. The method according to claim 2, wherein the frequency division cover code sequence is generated in one of the following manners:
by using the subsequence with the first length as a basic unit, mapping the subsequence with the first length based on a first mapping rule to two subcarriers on a symbol occupied by the port, wherein the two subcarriers belong to a same RB;
by using the subsequence with the second length as a basic unit, mapping the subsequence with the second length based on a second mapping rule to four subcarriers on the symbol occupied by the port, wherein the four subcarriers belong to a same RB or two RBs; and
by using the subsequence with the third length as a basic unit, mapping the subsequence with the third length based on a third mapping rule to six subcarriers on the symbol occupied by the port, wherein the six subcarriers belong to a same RB.

4. The method according to claim 2 or 3, wherein the subsequence with the first length is at least one of the following:
a first subsequence [+1, +1];
a second subsequence [+1, -1];
a third subsequence [-1, -1]; and
a fourth subsequence [-1, +1].

5. The method according to claim 2 or 3, wherein the subsequence with the second length is at least one of the following:
a fifth subsequence [+1, +1, +1, +1];
a sixth subsequence [+1, -1, +1, -1];
a seventh subsequence [+1, +1, -1, -1]; and
an eighth subsequence [+1, -1, -1, +1].

6. The method according to claim 2 or 3, wherein the subsequence with the third length is at least one of the following:
a ninth subsequence [+1, +1, +1, +1, +1, +1];
a tenth subsequence [+1, -1, +1, -1, +1, -1];
an eleventh subsequence [+1, +1, -1, -1, +1, +1]; and
a twelfth subsequence [+1, -1, -1, +1, +1, -1].

7. The method according to claim 4, wherein in a case that the frequency division cover code sequence is generated based on the first subsequence and the third subsequence as basic units, the first mapping rule is to alternately map the first subsequence and the third subsequence to subcarriers on the symbol occupied by the port.

8. The method according to claim 4, wherein in a case that the frequency division cover code sequence is generated based on the second subsequence and the fourth subsequence as basic units, the first mapping rule is to alternately map the second subsequence and the fourth subsequence to subcarriers on the symbol occupied by the port.

9. The method according to claim 1, wherein the frequency division cover code sequence is generated from a start subcarrier of common resource block 0.

10. The method according to claim 2, wherein in a case that the frequency division cover code sequence is generated based on the subsequence with the first length or the subsequence with the second length as a basic unit, the target demodulation reference signal is a demodulation reference signal of a first configuration type or a second configuration type, wherein the first configuration type is related to demodulation reference signal configuration type 1, and the second configuration type is related to demodulation reference signal configuration type 2.

11. The method according to claim 2, wherein in a case that the frequency division cover code sequence is generated based on the subsequence with the third length as a basic unit, the target demodulation reference signal is of a first configuration type, wherein the first configuration type is related to demodulation reference signal configuration type 1.

12. The method according to claim 1, wherein in a case that the first communication device is a terminal and that the second communication device is a network-side device, the method further comprises:
receiving, by the terminal, despreading indication information from the network-side device, wherein the despreading indication information is used to indicate corresponding despreading window information for the terminal for performing channel estimation on the target demodulation reference signal, and the despreading window information comprises a despreading window length.

13. The method according to claim 12, wherein the performing, by the first communication device, channel estimation on the target demodulation reference signal comprises:
performing, by the terminal, channel estimation on the target demodulation reference signal based on the despreading window length.

14. The method according to claim 13, wherein the despreading window length is 2 or 4.

15. The method according to claim 14, wherein the performing, by the terminal, channel estimation on the target demodulation reference signal based on the despreading window length comprises at least one of the following:
in a case that the despreading window length is 2, for ports of the target demodulation reference signal that belong to a same code division multiplexing group, performing, by the terminal, joint channel estimation by using two adjacent subcarriers occupied by the ports on the symbol as a despreading window; or
in a case that the despreading window length is 4, for ports of the target demodulation reference signal that belong to a same code division multiplexing group, performing, by the terminal, joint channel estimation by using four adjacent subcarriers occupied by the ports on the symbol as a despreading window.

16. The method according to claim 12, wherein before the receiving, by the terminal, despreading indication information from the network-side device, the method further comprises:
reporting, by the terminal, a channel estimation capability of the terminal to the network-side device.

17. The method according to claim 16, wherein the channel estimation capability is used to indicate whether the terminal supports channel estimation on the demodulation reference signal based on the despreading window length of 4.

18. The method according to claim 1, wherein in a case that the first communication device is a terminal and that the second communication device is a network-side device, before the terminal receives the target demodulation reference signal from the network-side device, the method further comprises:
reporting, by the terminal, a downlink data receiving capability supported by the terminal to the network-side device, wherein the downlink data receiving capability comprises a capability of a type of a quantity of RBs on a physical downlink shared channel PDSCH supported by the terminal.

19. The method according to claim 18, wherein the type of the quantity of RBs on the PDSCH comprises one of the following:
the quantity of RBs on the PDSCH is an even number; and
the quantity of RBs on the PDSCH is an odd number or an even number.

20. The method according to claim 18, wherein the terminal receives target configuration information from the network-side device, wherein the target configuration information corresponds to the downlink data receiving capability reported by the terminal, and the target configuration information is used to indicate the type of the quantity of RBs on the PDSCH received by the terminal.

21. A demodulation reference signal transmission apparatus, comprising:
a transceiver module, configured to receive a target demodulation reference signal from a second communication device; and
a calculation module, configured to perform channel estimation on the target demodulation reference signal, wherein
the target demodulation reference signal is generated based on N frequency division cover code sequences, the N frequency division cover code sequences are generated based on a subsequence with a target length as a basic unit and according to a resource mapping rule corresponding to the subsequence with the target length, the frequency division cover code sequence is used for code division multiplexing of a port of the target demodulation reference signal, and N is a positive integer.

22. A demodulation reference signal transmission method, comprising:
generating, by a second communication device, N frequency division cover code sequences by using a subsequence with a target length as a basic unit and according to a resource mapping rule corresponding to the subsequence with the target length, wherein the frequency division cover code sequence is used for code division multiplexing of a port of a target demodulation reference signal; and
generating, by the second communication device, the target demodulation reference signal based on the N frequency division cover code sequences, and sending the target demodulation reference signal to a first communication device, wherein
N is a positive integer.

23. The method according to claim 22, wherein the subsequence with the target length is one of the following:
a subsequence with a first length;
a subsequence with a second length; and
a subsequence with a third length, wherein
the first length is 2, the second length is 4, and the third length is 6.

24. The method according to claim 23, wherein the generating N frequency division cover code sequences by using a subsequence with a target length as a basic unit and according to a resource mapping rule corresponding to the subsequence with the target length comprises one of the following manners:
by using the subsequence with the first length as a basic unit, mapping the subsequence with the first length in a form of a first mapping rule to two subcarriers on a symbol occupied by the port, wherein the two subcarriers belong to a same RB;
by using the subsequence with the second length as a basic unit, mapping the subsequence with the second length in a form of a second mapping rule to four subcarriers on the symbol occupied by the port, wherein the four subcarriers belong to a same RB or two RBs; and
by using the subsequence with the third length as a basic unit, mapping the subsequence with the third length in a form of a third mapping rule to six subcarriers on the symbol occupied by the port, wherein the six subcarriers belong to a same RB.

25. The method according to claim 23 or 24, wherein the subsequence with the first length is at least one of the following:
a first subsequence [+1, +1];
a second subsequence [+1, -1];
a third subsequence [-1, -1]; and
a fourth subsequence [-1, +1].

26. The method according to claim 23 or 24, wherein the subsequence with the second length is at least one of the following:
a fifth subsequence [+1, +1, +1, +1];
a sixth subsequence [+1, -1, +1, -1];
a seventh subsequence [+1, +1, -1, -1]; and
an eighth subsequence [+1, -1, -1, +1].

27. The method according to claim 23 or 24, wherein the subsequence with the third length is at least one of the following:
a ninth subsequence [+1, +1, +1, +1, +1, +1];
a tenth subsequence [+1, -1, +1, -1, +1, -1];
an eleventh subsequence [+1, +1, -1, -1, +1, +1]; and
a twelfth subsequence [+1, -1, -1, +1, +1, -1].

28. The method according to claim 25, wherein in a case that the frequency division cover code sequence is generated based on the first subsequence and the third subsequence as basic units, the first mapping rule is to alternately map the first subsequence and the third subsequence to subcarriers on the symbol occupied by the port.

29. The method according to claim 25, wherein in a case that the frequency division cover code sequence is generated based on the second subsequence and the fourth subsequence as basic units, the first mapping rule is to alternately map the second subsequence and the fourth subsequence to subcarriers on the symbol occupied by the port.

30. The method according to claim 22, wherein the frequency division cover code sequence is generated by using a start subcarrier of a common resource block with a sequence number of 0 as a start position.

31. The method according to claim 23, wherein in a case that the frequency division cover code sequence is generated based on the subsequence with the first length or the subsequence with the second length as a basic unit, the target demodulation reference signal is a demodulation reference signal of a first configuration type or a second configuration type, wherein the first configuration type is related to demodulation reference signal configuration type 1, and the second configuration type is related to demodulation reference signal configuration type 2.

32. The method according to claim 23, wherein in a case that the frequency division cover code sequence is generated based on the subsequence with the third length as a basic unit, the demodulation reference signal is of a first configuration type, wherein the first configuration type is related to demodulation reference signal configuration type 1.

33. The method according to claim 22, wherein in a case that the first communication device is a terminal and that the second communication device is a network-side device, the method further comprises:
sending, by the network-side device, despreading indication information to the terminal, wherein the despreading indication information is used to indicate corresponding despreading window information for the terminal for performing channel estimation on the target demodulation reference signal, and the despreading window information comprises a despreading window length.

34. The method according to claim 33, wherein the despreading window length is 2 or 4.

35. The method according to claim 33, wherein before the sending, by the network-side device, despreading indication information to the terminal, the method further comprises:
receiving, by the network-side device, a channel estimation capability of the terminal from the terminal.

36. The method according to claim 35, wherein the channel estimation capability is used to indicate whether the terminal supports channel estimation on the demodulation reference signal based on the despreading window length of 4.

37. The method according to claim 22, wherein in a case that the first communication device is a terminal and that the second communication device is a network-side device, before the network-side device sends the target demodulation reference signal to the terminal, the method further comprises:
receiving, by the network-side device from the terminal, a downlink data receiving capability supported by the terminal, wherein the downlink data receiving capability comprises a capability of a type of a quantity of RBs on a PDSCH supported by the terminal.

38. The method according to claim 37, wherein the type of the quantity of RBs on the PDSCH comprises one of the following:
the quantity of RBs on the PDSCH is an even number; and
the quantity of RBs on the PDSCH is an odd number or an even number.

39. The method according to claim 37, wherein the network-side device sends target configuration information to the terminal, wherein the target configuration information corresponds to the downlink data receiving capability supported by the terminal and received by the network-side device from the terminal, and the target configuration information is used to indicate the type of the quantity of RBs on the PDSCH received by the terminal.

40. A demodulation reference signal transmission apparatus, comprising:
a generation module, configured to generate N frequency division cover code sequences by using a subsequence with a target length as a basic unit and according to a resource mapping rule corresponding to the subsequence with the target length, wherein the frequency division cover code sequence is used for code division multiplexing of a demodulation reference signal port of a target demodulation reference signal; and
a transmission module, configured to generate the target demodulation reference signal based on the N frequency division cover code sequences, and send the target demodulation reference signal to a first communication device, wherein
N is a positive integer.

41. A terminal, comprising a processor and a memory, wherein the memory stores a program or instructions capable of running on the processor, and when the program or instructions are executed by the processor, the steps of the demodulation reference signal transmission method according to any one of claims 1 to 20 are implemented.

42. A network-side device, comprising a processor and a memory, wherein the memory stores a program or instructions capable of running on the processor, and when the program or instructions are executed by the processor, the steps of the demodulation reference signal transmission method according to any one of claims 22 to 39 are implemented.

43. A readable storage medium, wherein the readable storage medium stores a program or instructions, and when the program or instructions are executed by a processor, the steps of the demodulation reference signal transmission method according to any one of claims 1 to 20 are implemented, or the steps of the demodulation reference signal transmission method according to any one of claims 22 to 39 are implemented.
